# NEUE EUROPÄISCHE PATENTSCHRIFT

(11) **EP 0 340 515 B2**
(45) Veröffentlichungstag und Bekanntmachung des Hinweises auf die Entscheidung über den Einspruch: **05.04.1995**
(45) Hinweis auf die Patenterteilung: 11.12.1991
(21) Anmeldenummer: 89106836.3
(22) Anmeldetag: 17.04.1989
(51) Int. Cl.: D21G 1/02, F16C 13/00

(54) **Beheizbare Durchbiegungseinstellwalze**
Heated adjustable-crown roll
Rouleau à réglage de la flexion chauffable

(30) Priorität: 06.05.1988 CH 1741/88
(43) Veröffentlichungstag der Anmeldung: 08.11.1989
(73) Patentinhaber: SULZER-ESCHER WYSS GMBH, D-88183 Ravensburg (DE)
(72) Erfinder: Link, Christoph, D-7987 Weingarten (DE)
(74) Vertreter: Morgan, James Garnet

(56) Entgegenhaltungen:
- EP-A- 338 236
- CH-A- 577 598
- DE-B- 1 193 792
- DE-B- 2 850 415
- DE-C- 2 902 956
- DE-C- 3 526 283
- GB-A- 2 195 004
- US-A- 4 726 691

## Beschreibung

Die Erfindung betrifft eine Durchbiegungseinstellwalze mit einem um einen stationären Träger rotierbar Walzenmantel, welcher gegenüber dem Träger mittels wenigstens eines hydrostatischen Stützelement abgestützt ist, wobei das Stützelement auf einem mit einem hydraulischen Druckmittel versorgten Druckraum in radialer Richtung gegen den Träger beweglich ist und eine der Walzenmantel-Innenseite zugekehrte Lauffläche für den Walzenmantel aufweist, auf welcher wenigstens eine mit einem hydraulischen Wärmeträgermedium versorgte Lagertasche vorgesehen ist.

Solche beheizbare Durchbiegungsausgleichswalzen sind beispielsweise aus CH-A-577 598 oder US-A-4282639 bekannt und werden beispielsweise in Glättkalandern für Papierbahnen, zur Verfestigung von Faservliesstoffen, sowie in Kunststoff- und Elastomer-Kalandern zur Druckbehandlung der entsprechenden Warenbahnen bei erhöhter Temperatur verwendet.

Bei der in CH-A-577 598 beschriebenen Walze sind die Lagertaschen der Stützelemente mittels Drosselbohrungen mit dem Druckraum des Stützelementes verbunden. Die Lagertaschen werden dabei über den Druckraum mit demselben Hydraulikmittel versorgt, welches sowohl zur Erzeugung der Presskraft des Stützelementes vermittels des Druckraumes als auch zur Lagerung des Walzenmantels vermittels der Lagertaschen dient. Zwecks Aufheizung des Walzenmantels ist das Hydraulikmedium vor der Zuführung zu den Druckräumen auf die erforderliche Temperatur aufheizbar. Auf diese Weise lässt sich der Mantel einer Durchbiegungsausgleichswalze zwar von Innen mit nur einer einzigen Hydraulikmittel-Zufuhr zu den einzelnen Stützelementen beheizen. Nachteilig ist jedoch, dass die für die Hydraulikmittel-Zufuhr erforderlichen Komponenten, z.B. Pumpen, Ventile oder andere Regelorgane die erforderlichen hohen Temperaturen von weit mehr als 100°C aushalten müssen, was häufig nicht gegeben ist, und dass die üblichen Hydraulikmittel, beispielsweise Drucköle, bei den erforderlichen hohen Temperaturen eine so niedrige Viskosität annehmen, d.h. so dünnflüssig werden, dass unerwünscht hohe Leckverluste entstehen.

Zur Vermeidung dieses Nachteiles ist bereits versucht worden, die Heizung der Walzenmantel-Innenseite von der Stütz-, Anpress- oder Lagerungsfunktion der Stützelemente zu trennen. Aus US-A-3 997 953 ist beispielsweise bekannt, auf der den Stützelementen entgegengesetzten Seite des Trägers bzw. Walzenmantels zusätzliche Presselemente vorzusehen, welche mit einem erhitzten Wärmeträgermedium versorgt werden, während die eigentlichen Stützelemente mit Druckmittel normaler Temperatur versorgt sind. Aus der US-A-4 282 638 sind seitlich am Träger Düsen vorgesehen aus welchen heisses Wärmeträgermedium auf die Walzenmantel-Innenseite gesprüht wird und der Walzenmantel dabei mittels Prallströmheizung aufgeheizt wird. Nachteilig ist bei solchen Walzen, dass zusätzliche Einbauten im Inneren der Walze erforderlich sind, welche einen Platz beanspruchen, der häufig nicht zur Verfügung steht, insbesondere bei Walzen für grosse Presskräfte, in denen ein besonders stabiler Träger verwendet werden muss.

Zwar ist es bereits bekannt, z.B. aus US-A-4 726 691, die Druckräume und die Lagertaschen einer Durchbiegungseinstellwalze separat mit Druckmittel zu versorgen. Jedoch wird dasselbe Druckmittel und dieselbe Pumpe verwendet, und es ist keine Heizung vorgesehen. Würde das Druckmittel zwecks Beheizung des Walzenmantels erhitzt, so würden die gleichen Probleme bezüglich der Temperaturemfindlichkeit der Komponenten und des Drucköles auftreten, wie vorstehend erwähnt.

In der nachveröffentlichen EP 0 338 236 A2 wird eine hydrostatisch innenabgestützte Walze beschrieben, bei der die Zuführung des hydraulischen Druckmittels zum Druckraum und die Zuführung eines hydraulischen Wärmeträgermediums in den Lagertaschen des gleichen Stützelements voneinander getrennt jedoch aus einem gemeinsamen Tank erfolgt. Das Wärmeträgermedium wird in Anschluß an eine Förderpumpe aufgeheist. Sowohl das hydraulische Druckmittel als auch das Wärmeträgermedium gelangen über eine gemeinsame Rückführleitung wieder in der Tank.

Die Erfindung betrifft die Aufgabe, die vorstehend angeführten Nachteile der Technik zu beseitigen, insbesondere eine von Innen beheizbare Durchbiegungseinstellwalze zu schaffen, bei der temperaturempfindliche Komponenten der Druckmittelversorgung nicht durch die Beheizung des Walzenmantels beeinflusst und einer erhöhten Temperatur ausgesetzt werden, und wobei keine zusätzlichen platzbeanspruchenden Einbauten erforderlich sind.

Erfindungsgemäss wird diese Aufgabe durch die Merkmale des Anspruchs 1 gelöst.

Durch die Trennung der Hydraulikkreisläufe der Druckräume und der Lagertaschen entfällt die Notwendigkeit, das gesamte Hydraulikmittel aufzuheizen, um eine Beheizung des Walzenmantels zu erreichen. Es genügt, nur das Wärmeträgermedium auf die erforderliche Temperatur zu heizen, während das zur Erzeugung der Anpresskraft verwendete Druckmittel auf der Normaltemperatur verbleibt und die Komponenten der Druckversorgungs- und Druckregeleinrichtungen nicht oder nur wenig durch das Heizmedium beeinflusst werden. Das Wärmeträgermedium dient hierbei gleichzeitig zur Lagerung des Walzenmantels bei erhöhter Temperatur.

Im Prinzip kann zwar für beide voneinander getrennte hydraulischen Kreisläufe das gleiche Hydraulikmedium, beispielsweise Drucköl verwendet werden, was den Vorteil hat, dass keine zusätzlichen Bohrungen für die Hydraulikmittel-Zufuhr im Träger vorgesehen werden müssen, falls an den einzelnen Hydraulikmittel-Zuführungen zu den Lagertaschen jeweils entsprechende Heizvorrichtungen vorgesehen sind, die individuell steuerbar sein können. Es kann jedoch vorteilhaft sein, für die beiden getrennten Kreisläufe verschiedene Hydraulikmittel vorzusehen, welche auf die betreffenden Betriebsbedingungen, insbesondere Betriebstemperaturen bezüglich ihrer Beständigkeit und Viskosität optimal angepasst sind, beispielsweise ein Tieftemperaturöl als Druckmittel und ein Hochtemperaturöl als Heizmittel oder Wärmeträgermedium. In diesem Fall ist es von Vorteil, wenn beide Hydraulikmittel miteinander kompatibel sind, d.h. sich miteinander vermischen lassen, so dass Betriebsstörungen vermieden werden.

Eine alternative Lösung der gestellten Aufgabe ist im Anspruch 7 angegeben.

Die Mittel zur Aufheizung des Wärmeträgermediums können im Inneren der Walze vorgesehen sein und beispielsweise aus Heissdampfleitungen, Elektroheizungen oder Induktionsspulen bestehen. Jedoch kann die Heizvorrichtung auch ausserhalb der Walze angeordnet sein und das Wärmeträgermedium getrennt vom Druckmittel durch separate Bohrungen im Träger den Lagertaschen zugeführt werden. Hierbei sind lediglich eine oder mehrere zusätzliche Bohrungen im Träger erforderlich, ohne zusätzlichen Platz im Walzen-Inneren zu beanspruchen.

Die Erfindung wird anhand der in den Figuren dargestellten Ausführungsbeispiele näher erläutert Es zeigen :
- Fig. 1: eine beheizbare Durchbiegungseinstellwalze im Querschnitt senkrecht zur Achse,
- Fig. 2: einen Ausschnitt aus einer solchen Walze mit schematischer Leitungsführung in zwei Kreisläufen,
- Fig. 3: einen Ausschnitt mit schematischer Leitungsführung mit gemeinsamem Kreislauf,
- Fig. 4: die Konstruktion eines Stützelementes und des Druckraumes in einer solchen Durchbiegungseinstellwalze,
- Fig. 5: ein abgewandeltes Beispiel eines Stützelementes und Druckraumes,
- Fig. 6: eine Hydraulikmittel-Zuführung im Querschnitt, und
- Fig. 7: eine Wärmeträgermedium-Zuführung in der Aufsicht.

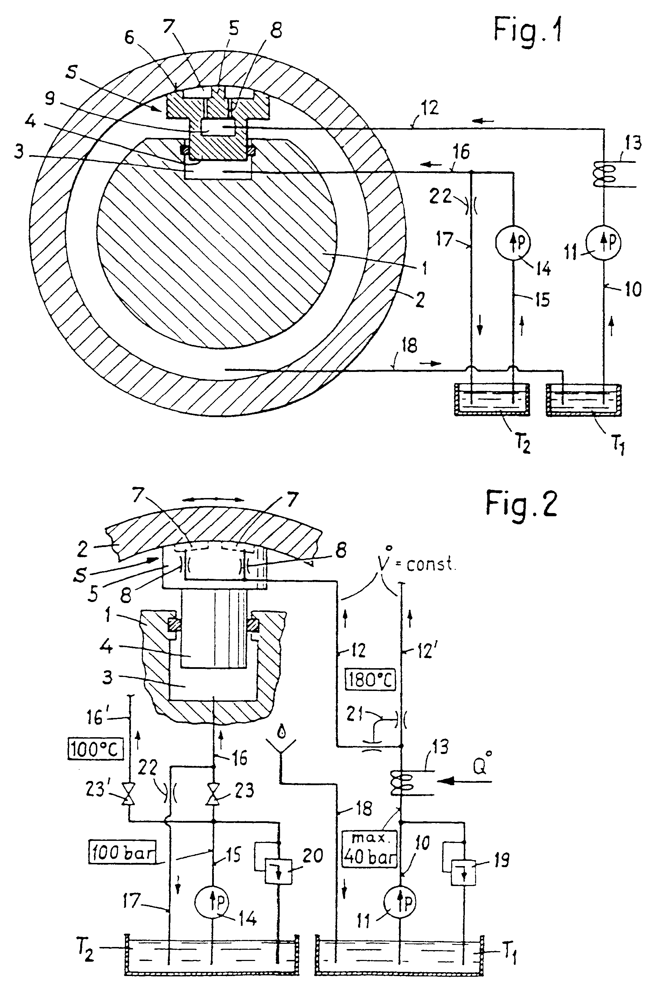

Figur 1 zeigt eine Durchbiegungseinstellwalze mit einem stationären Träger 1 und einem um diesen rotierbaren Walzenmantel 2. Im Träger 1 sind Bohrungen 3 als Druckräume ausgebildet, in welchen jeweils der Kolben 4 eines hydrostatischen Stützelementes S dichtend und neigbar geführt ist. Der Kolben 4 ist mit einem Kopfteil als Lagerschuh 5 verbunden, welcher eine Lagerfläche 6 mit hydrostatischen Lagertaschen 7 aufweist. Die Lagertaschen 7 sind durch Drosselbohrungen 8 mit einem Hohlraum 9 verbunden, der sich zwischen dem Kolben 4 und dem Lagerschuh 5 befindet. Dieser Hohlraum 9 wird aus einem Behälter T₁ durch eine Pumpe mit konstantem Volumenstrom durch eine Leitung 10 mit einem Wärmeträgermedium versorgt, welches mittels einer Heizvorrichtung 13, z.B. einer Induktionsspule, auf die erforderliche höhere Temperatur, beispielsweise in der Grössenordnung von 200°C aufgeheizt wird. Vom Hohlraum 9 fliesst dieses Wärmeträgermedium über die Drosselbohrungen 8 in die Lagertaschen 7 und bildet somit eine hydrostatische Lagerung für den Walzenmantel 2, wobei es gleichzeitig den Walzenmantel 2 auf die gewünschte höhere Temperatur aufheizt. Das aus den Lagertaschen 7 in das Innere des Walzenmantels 2 austretende Wärmeträgermedium wird über eine Leitung 12 abgeschöpft und in den Tank T₁ zurückgeführt.

Aus einem zweiten Tank T₂ wird über eine zweite Pumpe 14 ein hydraulisches Druckmittel, beispielsweise Drucköl über die Leitung 15 und 16 dem Druckraum 3 mit einem bestimmten Druck zugeführt, so dass auf den Kolben 4 des Stützelementes eine bestimmte Presskraft ausgeübt wird, welche mit dem Stützelement auf den Walzenmantel 2 übertragen wird. Da die Pumpe 14 zur Erzeugung des nötigen Druckes einen gewissen Durchfluss benötigt, wird über eine gedrosselte Zweigleitung 17 ein kleiner Teil des Druckmittels direkt in den Tank T₂ wieder zurückgeführt.

Figur 2 zeigt einen Ausschnitt aus einer Durchbiegungseinstellwalze mit einem Schema der Leitungsführung mitweiteren Details, wobei identische oder äquivalente Elemente mit denselben Bezugszeichen versehen sind. In diesem Beispiel wird das Wärmeträgermedium von der Pumpe 11 mit einem Druck von max. 40 bar über die Leitung 10, mit der Heizvorrichtung 13 auf ca. 180°C erhitzt, und über die Zuführleitung 12 den Lagertaschen 7 des Stützelementes S zugeführt, und gleichzeitig über Abzweigleitungen 12' parallel dazu weiteren nicht dargestellten Stützelementen in derselben Walze zugeleitet. An der Abzweigstelle ist ein Mengenteiler 21 vorgesehen, welcher für eine gleichmässige Versorgung der angeschlossenen Leitungen 12, 12'... mit konstantem Volumenstrom sorgt. Parallel zur Pumpe 11 ist ein Druckbegrenzungsventil 19 vorgesehen, welches den Pumpendruck auf den maximal zulässigen Druck, beispielsweise 40 bar begrenzt. Es wird bemerkt, dass je nach Anforderungen das Wärmeträgermedium auch auf höhere Temperaturen bis über 225°C erhitzt werden kann. Auch bei der Druckmittelzufuhr durch die Pumpe 14, die beispielsweise mit einem Druck von ca. 100 bar arbeitet, ist eine Verzweigung der Druckmittelzufuhr vorgesehen, d.h. über die Leitung 16 wird das Druckmittel mit einer Temperatur von möglichst nicht über 100°C über das Druckregelventil 23 dem Druckraum 3 des Stützelementes S zugeführt, und über Abzweigleitungen 16' über entsprechende Druckregelventile 23' den analogen Druckräumen der anderen Stützelemente der Walze. Dabei ist für jede dieser Zuführleitungen 16 eine Rückführleitung 17 mit einer Drosselstelle 22 vorgesehen, wodurch ein kleiner Teil vom Strom des Druckmitte abgetrennt und in den Tank T₂ zurückgeführt wird, um die Funktion der Pumpe 14 sicherzustellen.

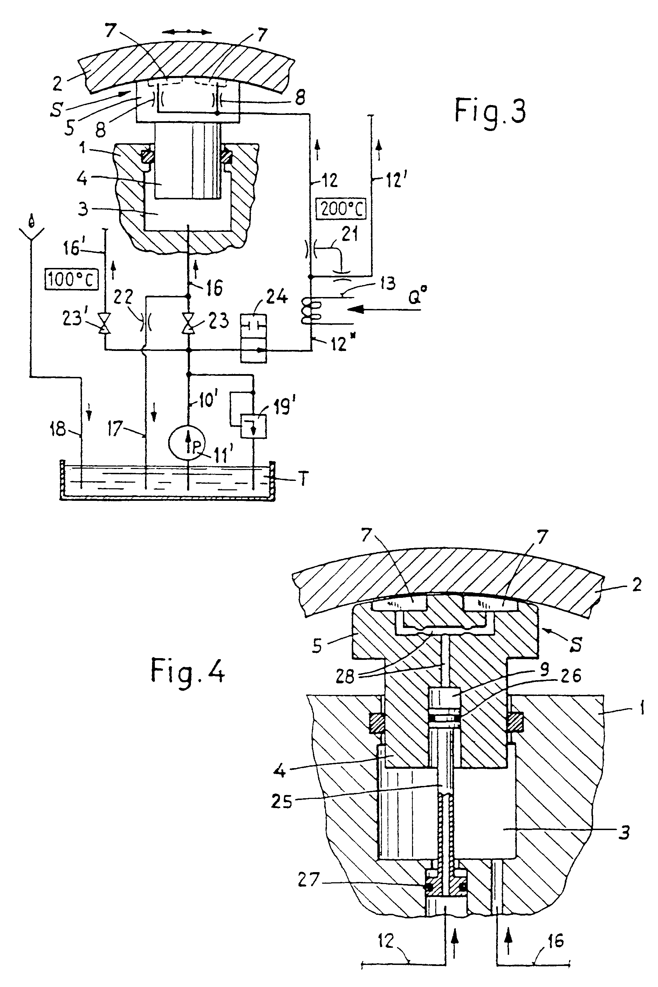

Figur 3 zeigt ein abgewandeltes Beispiel, bei dem mit einem einzigen temperaturfesten Hydraulik-Medium gearbeitet wird, welches sowohl als Druckmittel für den Druckraum 3 als auch als Wärmeträgermedium zur Versorgung der Lagertaschen 7 dient. Das Hydraulikmittel wird von einer Pumpe 11' dem gemeinsamen Tank T entnommen und über die Leitung 10' verteilt. Zunächst wird über die Leitung 16 über ein Dosierventil 23 der Druckraum 3 mit Druckmittel versorgt, wobei wiederum eine gedrosselte Rückleitung 17 vorgesehen ist, und über Abzweigleitungen 16' mit entsprechenden Dosierventilen 23' die Druckräume der parallelen Stützelemente. Eine weitere Abzweigleitung 12' führt über eine Heizvorrichtung 13 und über die Leitung 12 zu den Drucktaschen 7, und parallel dazu über Leitungen 12' zu den Drucktaschen paralleler Stützelemente. In der Versorgungsleitung 12' für das auf beispielsweise 200°C aufgeheizte Hydraulikmittel ist ein Ventil 24 vorgesehen, welches die Hydraulikmittelzufuhr zu den Lagertaschen, gesteuert von der Drehzahl des Walzenmantels 2, absperrt, wenn eine bestimmte Drehzahl erreicht ist. Das anfänglich als hydrostatisches Lagerelement wirkende Stützelement S arbeitet nach Absperrung der Hydraulikmittelzufuhr zu den Lagertaschen 7 nach Erreichen einer bestimmten Drehzahl dann rein hydrodynamisch. Dies hat den Vorteil, dass während des Betriebes der Walze kein heisses Hydraulikmittel in den Tank T zurückgeführt werden muss, so dass das Hydraulikmittel im Tank T auf einer niedrigeren Temperatur verbleibt.

Figur 4 zeigt ein praktisches Ausführungsbeispiel eines Stützelementes mit getrennter Druckmittel- und Wärmeträgermedium-Zufuhr. Hierbei ist im Träger 1 der Walze eine als Druckraum 3 dienende Zylinderbohrung vorgesehen, in welcher der Kolben 4 des Stützelementes S dichtend in Radialrichtung des Walzenmantels, also in Stützrichtung geführt ist. Im Träger sind Zuführleitungen 12 und 16 vorgesehen, welche im Inneren Teil des Druckraumes 3 münden. Im Zentrum des Kolbens 4 des Stützelementes ist eine weitere Zylinderbohrung 9 vorgesehen, welche im Druckraum 3 gegenüber der Zuführleitung 12 mündet. Zwischen dieser zentralen Bohrung 9 im Kolben 4 des Stützelementes und der zentralen Zuführleitung 12 ist ein rohrförmiges Verbindungsstück 25 vorgesehen, welches mit flanschförmigen Dichtungen 26, 27 gegen die zylindrischen Innenwände der Bohrung 9 und der Zuführleitung 12 gleitbar abgedichtet ist. Somit ist der innere Teil der Bohrung 9 und die Zuführleitung 12 vom Druckraum 3 abgetrennt. Der Druckraum 3 kann also über die Leitung 16 mit konstanten Volumenstrom mit einem Druckmittel versorgt werden, während über die Zuführleitung 12, das rohrförmige Verbindungsstück 25, die Bohrung 9 und über Drosselleitungen 28 den Lagertaschen 7 ein Wärmeträgermedium höherer Temperatur zugeführt werden kann.

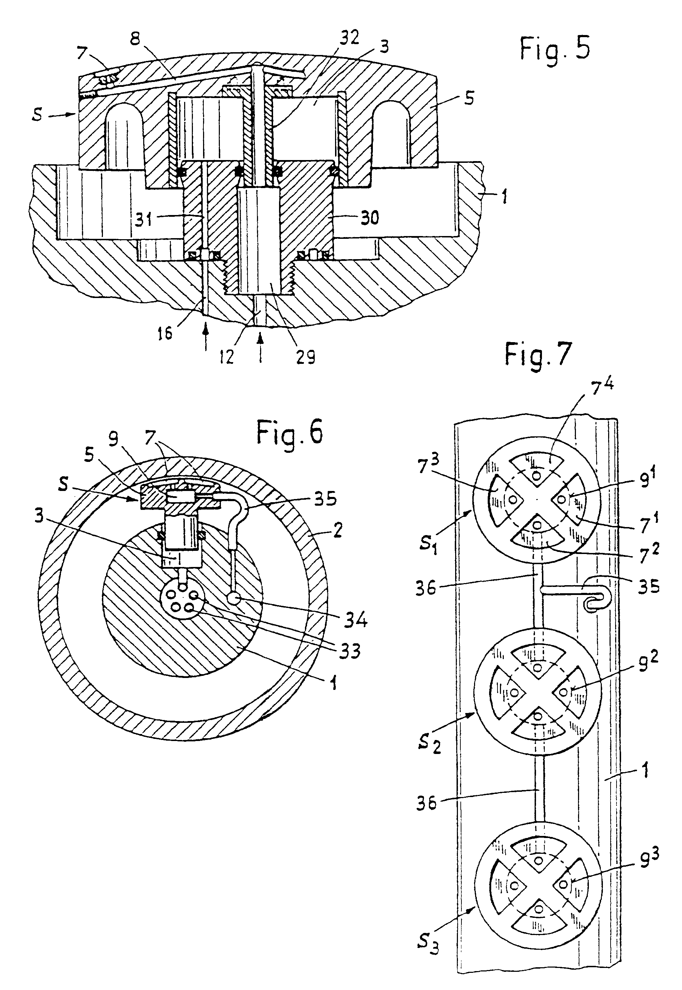

Figur 5 zeigt ein Beispiel eines Stützelementes mit mechanisch inverser Anordnung des Druckraumes 3 in einer zentralen zylindrischen Bohrung des Kopfteiles 5 des Stützelementes, welches an seiner Lagerfläche wiederum mit Lagertaschen 7 versehen ist. Auf den Träger 1 ist ein zylindrischer Aufsatz 30 aufgesetzt, beispielsweise aufgeschweisst oder aufgeschraubt, welcher mit einer zentralen Bohrung 29 versehen ist, an welche die Zuleitung 12 des Wärmeträgermediums angeschlossen ist. Das Kopfteil 5 ist vermittels seiner zylindrischen Bohrung bzw. des Druckraumes 3 auf diesem Aufsatz 30 in Radialrichtung beweglich dichtend geführt. Im Aufsatz 30 ist weiterhin eine exzentrische Bohrung 31 zur Zuführung des Druckmittels über die Leitung 16 zum Druckraum 3 vorgesehen. Im Zentrum des Kopfteiles 5 ist eine Hülse 32 vorgesehen, welche so bemessen ist, dass sie dichtend in der Bohrung 29 des Aufsatzes 30 verschiebbar ist. Durch diese Hülse 32 kann das Wärmeträgermedium von der Bohrung 29 des Aufsatzes 30 über die Drosselleitungen 8 den Lagertaschen 7 zugeführt werden.

Figur 6 zeigt ein Beispiel der Hydraulikmittel-Zufuhr bei einem Stützelement S, bei dem keine Verbindung zwischen den Lagertaschen 7 und dem Druckraum 3 besteht, sondern das Wärmeträgermedium, wie bei Beispiel nach Fig. 1, über einen Hohlraum 9 im Stützelement S den Lagertaschen 7 zugeführt wird. Im Träger 1 sind einerseits eine Anzahl von Bohrungen 33 vorgesehen, über welche das Druckmittel den einzelnen Druckräumen der Stützelemente S zugeführt wird. Dabei können die einzelnen Druckräume 3 separat von Druckmittel unterschiedlichen Druckes angesteuert werden, um analog dazu die Presskraft der zugehörigen Stutzelemente individuell zu steuern. Ueber eine weitere Leitung 34 im Träger wird das Wärmeträgermedium über eine flexible Verbindungsleitung 34 seitlich an den Kopfteil 5 des Stützelementes herangeführt und in den Hohlraum 9 geleitet, von wo aus es in die Lagertaschen 7 strömt.

Figur 7 zeigt die Verteilung des Wärmeträgermediums zu einer Reihe von Stützelementen S₁, S₂, S₃ über eine einzige Bohrung im Träger 1. Von dieser Bohrung wird das Wärmeträgermedium über eine flexible Verbindung 35 einer Querverbindungsleitung 36 zugeleitet, die die Hohlräume 9¹, 9², 9³ der einzelnen Stützelemente S₁, S₂, S₃ untereinander verbindet. Von den Hohlräumen 9¹, 9², 9³ strömt dann das Wärmeträgermedium in die an jedem Stützelement vorgesehenen Lagertaschen 7¹, 7², 7³, 7⁴. Die Querverbindungsleitungen 36 zwischen den Stützelementen oder deren Anschlüsse an die Stützelemente sind ebenfalls leicht flexibel ausgebildet und stabilisieren zudem die Stützelemente gegen Verdrehung. Eine solche Anordnung ist besonders dann brauchbar, wenn die einzelnen Stützelemente mit einem Wärmeträgermedium gleichen Druckes und gleicher Temperatur versorgt werden können. Dabei können die Stützelemente durchaus mit Druckmittel unterschiedlichen Druckes beaufschlagt werden, so dass der Pressdruck der einzelnen Stützelemente individuell einstellbar und steuerbar ist.

Die Heizvorrichtung 13 für das Wärmeträgermedium kann wahlweise ausserhalb der Walze vorgesehen sein und beispielsweise als Heissdampfheizung, Elektroheizung, als Induktionsspulen oder in anderer geeigneten Weise ausgeführt sein, insbesondere wenn an allen Stellen der Walze eine gleichförmige Temperatur genügt Stattdessen können die Heizvorrichtungen auch im Inneren der Walze selbst vorgesehen sein, was von Vorteil ist, wenn an den einzelnen Stützelementen ein Wärmeträgermedium mit individuell einstellbarer Temperatur gewünscht oder erforderlich ist.

## Patentansprüche

1. Durchbiegungseinstellwalze mit einem um einen stationären Träger (1) rotierbaren Walzenmantel (2), welcher gegenüber dem Träger (1) mittels Wenigstens eines hydrostatischen Stützelementes (4, 5) abgestützt ist, wobei das Stützelement (4, 5) auf einem mit einem hydraulischen Druckmittel versorgten Druckraum (3) in radialer Richtung gegen den Träger beweglich ist und eine der Walzenmantel-Innenseite (6) zugekehrte Lauffläche für den Walzenmantel aufweist, auf welcher wenigstens eine mit einem hydraulischen Wärmeträgermedium versorgte Lagertasche (7) vorgesehen ist, wobei Mittel (13) zur Aufheizung des hydraulischen Wärmeträgermediums vorgesehen sind, und
die Zuführung (16) des hydraulischen Druckmittels zum Druckraum (3) und die Zuführung (12) des hydraulischen Wärmeträgermediums (10) zu den Lagertaschen (7) des gleichen Stützelements (4, 5) voneinander getrennt und die Mittel (13) zur Aufheizung eingerichtet sind, das hydraulische Wärmeträgermedium auf eine höhere Temperatur als die Temperatur des hydraulischen Druckmittels aufzuheizen und die Hydraulikkreisläufe der Druckräume einerseits und der Lagertaschen andererseits voneinander getrennt sind, wobei der Kreislauf für das hydraulische Wärmeträgermedium einen Tank (T₁), eine Pumpe (11), die Mittel (13) zur Aufheizung, die Lagertaschen (7) der Stützelemente (4, 5) sowie eine Rückführung über den Innenraum des Walzenmantels (2) zum Tank (T₁) umfaßt und der Kreislauf für das hydraulische Druckmittel aus einem geschlossenen, einen Tank (T₂), eine Pumpe (14) und eine Drosselstelle (22) enthaltenden Strömungskreislauf besteht, welcher zwischen Pumpe (14) und Drosselstelle (22) über die Zuführung (16) mit dem Druckraum (3) des Stützelementes (4, 5) verbunden ist.

2. Durchbiegungseinstellwalze nach Anspruch 1, dadurch gekennzeichnet, dass die Zuführung (16) des Druckmittels von einem Druckmittel-Tank (T₂) über eine Pumpe (14) und ein Druckregelventil (23) zum Druckraum (3) führt.

3. Durchbiegungseinstellwalze nach einem der Ansprüche 1 oder 2, dadurch gekennzeichnet, dass die Zuführung (10) des Wärmeträgermediums von einem Wärmeträgermedium-Tank (T₁) über eine Pumpe (11) und Aufheizungs-Mittel (13) zu den Lagertaschen (7) führt.

4. Durchbiegungseinstellwalze nach Anspruch 2 oder 3, dadurch gekennzeichnet, dass parallel zuwenigstens einer der Pumpen (11, 14) ein Druckbegrenzungsventil (19, 20) angeordnet ist.

5. Durchbiegungseinstellwalze nach einem der Ansprüche 2 bis 4, dadurch gekennzeichnet, dass wenigstens eine der Zuführungen (10, 16) eine Verzweigung aufweist, über die das hydraulische Medium gleichmässig auf mehrere Stützelemente (S) verteilt wird.

6. Durchbiegungseinstellwalze nach einem der Ansprüche 1 bis 4, dadurch gekennzeichnet, dass das hydraulische Druckmittel und das Wärmeträgermedium miteinander mischbar sind.

7. Durchbiegungseinstellwalze mit einem um einen stationären Träger (1) rotierbaren Walzenmantel (2), welcher gegenüber dem Träger (1) mittels wenigstens eines hydrostatischen Stützelementes (4, 5) abgestützt ist, wobei das Stützelement (4, 5) auf einem mit einem hydraulischen Druckmittel versorgten Druckraum (3) in radialer Richtung gegen den Träger beweglich ist und eine der Walzenmantel-Innenseite (6) zugekehrte Lauffläche für den Walzenmantel aufweist, auf welcher wenigstens eine mit einem hydraulischen Wärmeträgermedium versorgte Lagertasche (7) vorgesehen ist, und wobei Mittel (13) zur Aufheizung des hydraulischen Wärmeträgermediums vorgesehen sind,
dadurch **gekennzeichnet,**
daß die Zuführung (16) des hydraulischen Druckmittels zum Druckraum (3) und die Zuführung (12) des hydraulischen Wärmeträgermediums (10) zu den Lagertaschen (7) des gleichen Stützelementes (4, 5) voneinander getrennt sind, daß die Mittel (13) zur Aufheizung eingerichtet sind, das hydraulische Wärmeträgermedium auf eine höhere Temperatur als die Temperatur des hydraulischen Druckmittels aufzuheizen, daß als Druckmittel und als Wärmeträgermedium dasselbe hydraulische Medium verwendet wird, welches einem gemeinsamen Tank (T) mittels einer Pumpe (11') entnommen wird und einerseits über ein Druckregelventil (23) dem Druckraum (3) und andererseits über Aufheizungsmittel (13) den Lagertaschen (7) des Stützelementes (S) zugeführt wird, und daß in der Zuführung (12'') des aufgeheizten Hydraulikmittels ein Absperrventil (24) angeordnet ist, welches den Durchfluß des Hydraulikmittels zu den Lagertaschen (7) absperrt, sobald die Drehzahl des Walzenmantels (2) einen vorgegebenen Schwellenwert überschreitet.

8. Durchbiegungseinstellwalze nach einem der Ansprüche 1 bis 7,
dadurch **gekennzeichnet,**
daß im Träger (1) getrennte Bohrungen für die Zuführung des Druckmittels (16) zum Druckraum (3) und des Wärmeträgermediums (12) zu den Lagertaschen (7) vorgesehen sind.

9. Durchbiegungseinstellwalze nach Anspruch 8,
dadurch **gekennzeichnet,**
daß zwischen dem Stützelement (S) und der Zuführung (12) des Wärmeträgermediums eine den Druckraum (3) überbrückende bewegliche rohrförmige Hülse (25, 32) vorgesehen ist, deren Innenraum gegenüber dem Druckraum (3) abgedichtet ist und über welche das Wärmeträgermedium durch den Druckraum (3) hindurch, jedoch ohne Kontakt mit diesem, den Lagertaschen (7) zuführbar ist.

10. Durchbiegungseinstellwalze nach einem der Ansprüche 1 bis 9,
dadurch **gekennzeichnet,**
daß im Inneren des Stützelementes (S) ein Hohlraum (9) vorgesehen ist, der mit den Lagertaschen (7) verbunden und über eine Bohrung (34) im Träger (1) und eine zumindest teilweise flexible Leitung (35) mit Wärmeträgermedium versorgbar ist.

11. Durchbiegungseinstellwalze nach Anspruch 10,
dadurch **gekennzeichnet,**
daß die Hohlräume (9¹, 9², 9³) benachbarter Stützelemente (S₁, S₂, S₃) durch Verbindungsleitungen (36) untereinander verbunden sind.

## Claims

1. A sag compensation roll having a roller shell (2) which is rotatable about a stationary support (1) and which is supported with respect to the support (1) by means of at least one hydrostatic supporting element (4, 5), with the supporting element (4, 5) being movable in the radial direction towards the support on a pressure chamber (3) supplied with a hydraulic pressure medium and having a running surface, facing the inside (6) of the roller shell, for the roller shell, on which surface at least one bearing pocket (7) supplied with a hydraulic heat-transfer medium is provided, with means (13) for heating the hydraulic heat-transfer medium being provided, and the means (16) for supplying the hydraulic pressure medium to the pressure chamber (3) and the means (12) for supplying the hydraulic heat-transfer medium (10) to the bearing pockets (7) of the same supporting element (4, 5) are separated from each other and the means (13) for heating are provided to heat the hydraulic heat-transfer medium to a higher temperature than the temperature of the hydraulic pressure medium, and the hydraulic circuits of the pressure chambers on one hand and of the bearing pockets on the other hand are separate from each other, the circuit for the hydraulic heat-transfer medium comprising a tank (T₁), a pump (11), the means (13) for heating, the bearing pockets (7) of the supporting elements (4, 5) and a recycling means via the interior of the roller shell (2) to the tank (T₁), and the circuit for the hydraulic pressure medium consisting of a closed flow circuit containing a tank (T₂), a pump (14) and a choke point (22), which circuit is connected between the pump (14) and the choke point (22) via the supply means (16) to the pressure chamber (3) of the supporting element (4, 5).

2. A sag compensation roll according to Claim 1, characterised in that the supply means (16) for the pressure medium leads from a pressure medium tank (T₂) via a pump (14) and a pressure regulation valve (23) to the pressure chamber (3).

3. A sag compensation roll according to one of Claims 1 or 2, characterised in that the supply means (10) for the heat-transfer medium leads from a heat-transfer medium tank (T₁) via a pump (11) and heating means (13) to the bearing pockets (7).

4. A sag compensation roll according to Claim 2 or 3, characterised in that a pressure limitation valve (19, 20) is arranged in parallel to at least one of the pumps (11, 14).

5. A sag compensation roll according to one of Claims 2 to 4, characterised in that at least one of the supply means (10, 16) has a branch by means of which the hydraulic medium is distributed evenly to a plurality of supporting elements (S).

6. A sag compensation roll according to one of Claims 1 to 4, characterised in that the hydraulic pressure medium and the heat-transfer medium can be mixed together.

7. A sag compensation roll having a roller shell (2) which is rotatable about a stationary support (1) and which is supported with respect to the support (1) by means of at least one hydrostatic supporting element (4, 5), with the supporting element (4, 5) being movable in the radial direction towards the support on a pressure chamber (3) supplied with a hydraulic pressure medium and having a running surface, facing the inside (6) of the roller shell, for the roller shell, on which surface at least one bearing pocket (7) supplied with a hydraulic heat-transfer medium is provided, and with means (13) for heating the hydraulic heat-transfer medium being provided, characterised in that the means (16) for supplying the hydraulic pressure medium to the pressure chamber (3) and the means (12) for supplying the hydraulic heat-transfer medium (10) to the bearing pockets (7) of the same supporting element (4, 5) are separated from each other, that the means (13) for heating are provided to heat the hydraulic heat-transfer medium to a higher temperature than the temperature of the hydraulic pressure medium, that the same hydraulic medium is used as the pressure medium and as the heat-transfer medium and is taken from a common tank (T) by means of a pump (11') and is supplied on one hand to the pressure chamber (3) via a pressure regulation valve (23) and on the other hand to the bearing pockets (7) of the supporting element (S) via heating means (13), and that a shutoff valve (24) is located in the supply means (12'') for the heated hydraulic medium, which valve shuts off the flow of the hydraulic medium to the bearing pockets (7) as soon as the speed of rotation of the roller shell (2) exceeds a preset threshold value.

8. A sag compensation roll according to one of Claims 1 to 7, characterised in that separate bores for supplying the pressure medium (16) to the pressure chamber (3) and the heat-transfer medium (12) to the bearing pockets (7) are provided in the support (1).

9. A sag compensation roll according to Claim 8, characterised in that a movable tubular sleeve (25, 32) which bridges the pressure chamber (3) is provided between the supporting element (S) and the supply means (12) for the heat-transfer medium, the interior of which sleeve is sealed off from the pressure chamber (3) and by means of which sleeve the heat-transfer medium can be supplied to the bearing pockets (7) through the pressure chamber (3), but without contact therewith.

10. A sag compensation roll according to one of Claims 1 to 9, characterised in that a cavity (9) is provided in the interior of the supporting element (S), which cavity communicates with the bearing pockets (7) and can be supplied with heat-transfer medium via a bore (34) in the support (1) and an at least partially flexible line (35).

11. A sag compensation roll according to Claim 10, characterised in that the cavities (9¹, 9², 9³) of adjacent supporting elements (S₁, S₂, S₃) are interconnected by connecting lines (36).

## Revendications

1. Cylindre à flexion réglable avec une chemise de cylindre (2) rotative autour d'un support (1) stationnaire, qui est soutenue par rapport au support (1) au moyen d'au moins un élément d'appui hydrostatique (4, 5), l'élément d'appui (4, 5) étant mobile en sens radial par rapport au support sur une chambre à pression (3) alimentée avec un fluide hydraulique de pression et présentant une portée pour la chemise de cylindre, dirigée vers la face interne (6) de la chemise de cylindre, sur laquelle portée est prévue au moins une poche de palier (7) alimentée avec un fluide hydraulique vecteur de chaleur, des moyens (13) étant prévus pour le chauffage du fluide hydraulique vecteur de chaleur, et l'amenée (16) du fluide hydraulique de pression à la chambre de pression (3) et l'amenée (12) du fluide hydraulique vecteur de chaleur (10) aux poches de palier (7) du même élément d'appui (4, 5) étant séparées l'une de l'autre et les moyens (13) de chauffage étant agencés pour chauffer le fluide hydraulique vecteur de chaleur à une température supérieure à celle du fluide hydraulique de pression, le circuit hydraulique des chambres à pression, d'une part, et celui des poches de palier d'autre part, étant séparés l'un de l'autre, le circuit pour le fluide hydraulique vecteur de chaleur comprenant un réservoir (T₁), une pompe (11), les moyens (13) de chauffage, les poches de palier (7) des éléments d'appui (4, 5), ainsi qu'un retour vers le réservoir (T₁) à travers l'espace intérieur de la chemise de cylindre (2), et le circuit pour le fluide hydraulique de pression étant constitué par un circuit de circulation fermé contenant un réservoir (T₂), une pompe (14) et un étranglement (22), ce circuit étant relié entre la pompe (14) et l'étranglement (22) à la chambre de pression (3) de l'élément d'appui (4, 5) par l'intermédiaire de l'amenée (16).

2. Cylindre à flexion réglable selon la revendication 1, caractérisé en ce que l'amenée (16) du fluide de pression part d'un réservoir (T₂) de fluide de pression à travers une pompe (14) et une vanne de régulation de pression (23) pour parvenir à la chambre de pression (3).

3. Cylindre à flexion réglable selon une des revendications 1 ou 2, caractérisé en ce que l'amenée (10) du fluide vecteur de chaleur part d'un réservoir (T₁) de fluide vecteur de chaleur à travers une pompe (11) et des moyens de chauffage (13) pour parvenir aux poches de palier (7).

4. Cylindre à flexion réglable selon la revendication 2 ou 3, caractérisé en ce qu'une soupape limitrice de pression (19, 20) est disposée en parallèle sur au moins une des pompes (11, 14).

5. Cylindre à flexion réglable selon une des revendications 2 à 4, caractérisé en ce qu'au moins une des amenées (10, 16) présente une ramification par laquelle le fluide hydraulique est réparti uniformément sur plusieurs éléments d'appui (S).

6. Cylindre à flexion réglable selon une des revendications 1 à 4, caractérisé en ce que le fluide hydraulique de pression et le fluide vecteur de chaleur sont miscibles l'un avec l'autre.

7. Cylindre à flexion réglable avec une chemise de cylindre (2) rotative autour d'un support (1) stationnaire, qui est soutenue par rapport au support (1) au moyen d'au moins un élément d'appui hydrostatique (4, 5), l'élément d'appui (4, 5) étant mobile en sens radial par rapport au support sur une chambre à pression (3) alimentée avec un fluide hydraulique de pression et présentant une portée dirigée vers la face interne (6) de la chemise de cylindre pour la chemise de cylindre, sur laquelle portée est prévue au moins une poche de palier (7) alimentée avec un fluide hydraulique vecteur de chaleur, des moyens (13) étant prévus pour le chauffage du fluide hydraulique vecteur de chaleur, **caractérisé** en ce que l'amenée (16) du fluide hydraulique de pression à la chambre de pression (3) et l'amenée (12) du fluide hydraulique vecteur de chaleur (10) aux poches de palier (7) du même élément d'appui (4, 5) sont séparées l'une de l'autre, en ce que les moyens (13) de chauffage sont agencés pour chauffer le fluide hydraulique vecteur de chaleur à une température supérieure à celle du fluide hydraulique de pression, en ce que le même fluide hydraulique est utilisé comme fluide de pression et comme fluide vecteur de chaleur, en étant prélevé dans un réservoir commun (T) au moyen d'une pompe (11') et amené d'une part, à la chambre de pression (3) à travers une vanne régulatrice de pression (23) et d'autre part aux poches de palier (7) de l'élément d'appui (S) à travers des moyens de chauffage (13), et en ce qu'une soupape d'arrêt (24) est disposée dans l'amenée (12'') du fluide hydraulique chauffé, laquelle soupape empêche l'écoulement du fluide hydraulique vers les poches de palier (7) dès que la vitesse de rotation de la chemise de cylindre (2) dépasse une valeur de seuil prédéterminée.

8. Cylindre à flexion réglable selon une des revendications 1 à 7, caractérisé en ce que sont prévues dans le support (1) des forures séparées pour l'amenée du fluide de pression (16) à la chambre de pression (3) et du fluide vecteur de chaleur (12) aux poches de palier (7).

9. Cylindre à flexion réglable selon la revendication 8, caractérisé en ce qu'il est prévu, entre l'élément d'appui (S) et l'amenée (12) du fluide vecteur de chaleur, une douille mobile tubulaire (25, 32) traversant la chambre de pression (3), l'espace intérieur de cette douille étant étanche par rapport à la chambre de pression (3), le fluide vecteur de chaleur pouvant être amené aux poches de palier (7) à travers cette douille en traversant la chambre de pression (3), mais sans contact avec celle-ci.

10. Cylindre à flexion réglable selon une des revendications 1 à 9, caractérisé en ce qu'il est prévu à l'intérieur de l'élément d'appui (S) une cavité (9) qui est reliée aux poches de palier (7) et qui peut être alimentée en fluide vecteur de chaleur à travers une forure (34) dans le support (1) et à travers une conduite (35) qui est au moins partiellement flexible.

11. Cylindre à flexion réglable selon la revendication 10, caractérisé en ce que les cavités (9¹, 9², 9³) d'éléments d'appui voisins (S₁, S₂, S₃) sont reliées entre elles par des conduites de liaison (36).
